# EUROPEAN PATENT APPLICATION

(11) **EP 1 790 680 A1**
(43) Date of publication of application: **30.05.2007**
(21) Application number: 05025908.4
(22) Date of filing: 28.11.2005
(51) Int. Cl.: C08J 3/24

(54) **Verfahren zur Herstellung von Form-Gedächtnis Materialien aus standard thermoplastichen Polymeren**

(71) Applicant: Mnemoscience GmbH, 52531 Uebach-Palenberg (DE)
(72) Inventor: Lendlein, Andreas, 14167 berlin (DE)
(74) Representative: Grünecker, Kinkeldey, Stockmair & Schwanhäusser Anwaltssozietät

(57) **Abstract**

The present invention concerns method of preparing shape memory materials starting from standard thermoplastic polymers. The present invention further is concerned with products obtained by the methods in accordance with the present invention and the use of these products over a wide variety of applications.

## Description

The present invention concerns methods of preparing shape memory materials starting from standard thermoplastic polymers. The present invention further is concerned with products obtained by the methods in accordance with the present invention and the use of these products over a wide variety of applications.

Shape memory materials are an interesting class of materials which have been investigated in the recent years. Shape memory functionality is the ability of a material to temporarily fix a second shape after an elastic deformation and only recover its original shape after application of an external stimulus. While this effect is one-way, reversible shape changes induced by cooling and heating, i.e. a two-way effect may also be realized.

Such a phenomenon is based on a structural phase transformation within the material. The advantageous and intriguing properties of these materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The phenomenon is a functionality and not an inherent material property. The effect/functionality results from a combination of polymer structure and specific functionalization processes.

The first materials known to provide this functionality were shape memory metal alloys. In the recent past, shape memory polymers have been developed. Typical shape memory polymers are, for example, phase segregated linear block copolymers, having a hard segment and a switching segment. A drawback of these materials is the requirement of laborious chemical synthesis, together with the requirement of using high-priced starting materials. Important representatives of these types of materials are disclosed in the international publications WO 99/42147 and WO 99/42528.

The phenomenon of shape memory property is generally defined as a function of the material as such, after suitable programming steps (deformation and fixation in the deformed state). As outlined above, an external stimulus can trigger a change in shape retransforming the material from the temperature shape to the original, i.e. permanent shape.

The present invention attempts to overcome the drawbacks associated with the materials known in the prior art. In particular, the present invention aims to enable the preparation of shape memory materials which can rely on the use of cheap starting materials and simple processing means, desirably standard processing equipment in the field of polymer technology.

### Brief description of the invention

The above objects have been solved with the method for preparing shape memory materials as defined in claim 1. Preferred embodiments are defined in claims 2 to 5. Claims 6 to 10 define shape memory materials in accordance with the present invention while claims 11 to 13 describe suitable uses of such materials.

### Brief description of the figures

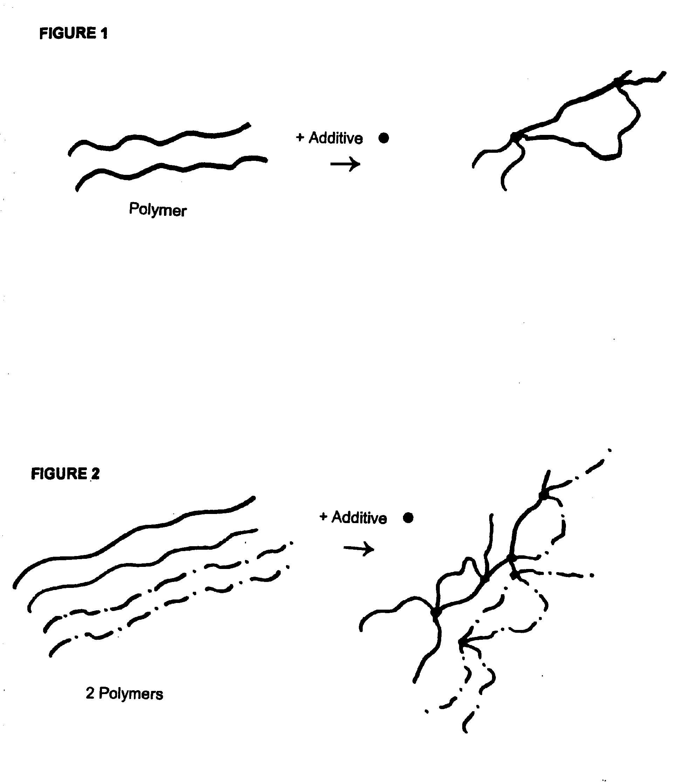

Figures 1 to 4 show schematic representations of embodiments of the present invention discussed in further detail below.

### Detailed description of the present invention

The present invention provides a possibility to prepare shape memory materials based on cheap starting materials, typically thermoplastic polymers, using standard polymer processing equipment.

Typical starting materials which can be used in accordance with the present invention are in particular established engineering plastics, including homopolymers and copolymers, such as polyamides (PA), for example nylon 6, polyesters, such as polyethyleneterephthalat (PET), polypropyleneterephthalat (PPT), polycarbonates (PC), acrylnitrile-butadiene-styrene (ABS) block copolymers as well as other thermoplastic materials, such as vinyl polymers or polyolefins, in particular polyvinylchloride (PVC), polyvinylpyrrolidone (PVP), polyacrylonitrile (PAN), polystyrene (PS) and polyethylene (PE), polypropylene (PP), copolymers of ethylene and propylene, polyether, polyurethanes (PUR) etc. The methods in accordance with the present invention enable to prepare shape memory materials from these standard polymers by simple reactions using standard polymer processing equipment, in accordance with any of the principle options outlined below.

By appropriately assembling the components, i.e. starting standard polymer and shape memory additive it is possible to tailor the shape memory functionality of the resulting compound, for example one-shape memory functionality or two-shape or multi-shape memory functionality. This requires the provision of different phases within the compound, in accordance with the basic theory of shape memory functionality as for example derivable from the above mentioned international patent applications. The fact that the present invention enables the provision of materials derived from standard polymers having shape memory functionality may be explained, without being bound to the theory, on the basis of the following observations on a molecular level within the compound prepared.

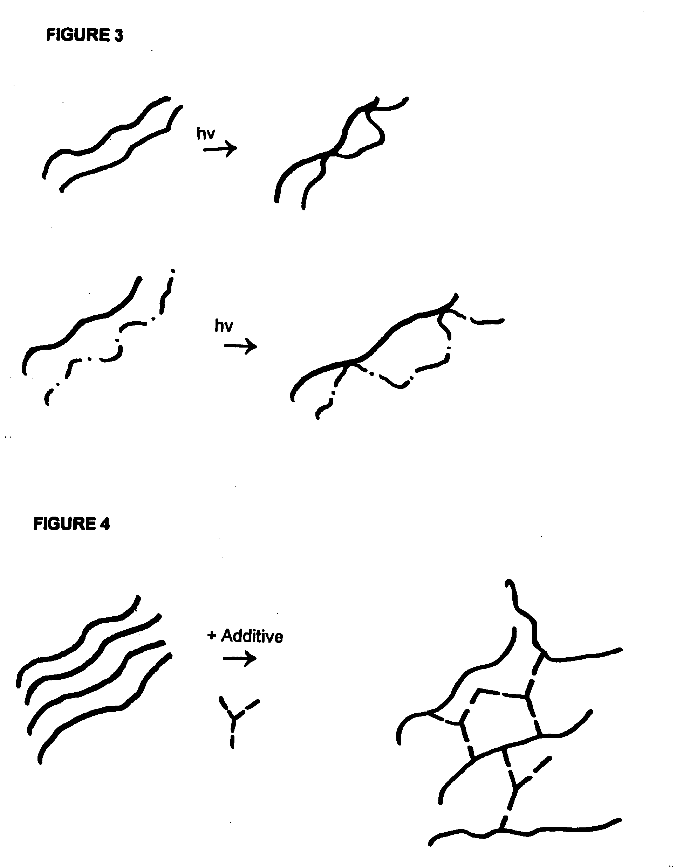

Using one type of polymer and one shape memory additive providing direct chemical, covalent crosslinks between the polymer chains, "loops" are provided (see figure 1) which correspond to switching segments / switching phases. It is only required that this segment/phase possesses a transition temperature, for example in association with a glass transition, crystallisation processes etc. Using two different types of standard polymers and one type of shape memory additives "loops" of different kind and/or different composition may be obtained, corresponding to multiple phases enabling the preparation of compounds comprising at least two different (switching) phases enabling the possibility of multi-shape memory functionality (see figure 2). The above outlined two embodiments may also be established by using suitably reactive polymers which may be crosslinked by irradiation without the use of shape memory additives (see figure 3). A further embodiment is the use of multifunctional shape memory additives providing crosslinks and bridging groups not only between two polymer chains but between multiple chains (see figure 4). This embodiment also may provide more than one phase, i.e. enabling multi-shape memory functionality.

The first possibility to prepare shape memory materials from standard polymers is the melt compounding of a standard polymer, or a mixture of two, three or more different standard poylmers with additives which are designated shape memory additives in the following, which enable the establishment of chemical or physical network points or crosslinking points in the compounded composition during a subsequent processing step. During this process or during subsequent processing steps, further additives can be included, such as antioxidants, UV absorbers, fillers, reinforcement materials, coloring agents, processing aids etc. Suitable shape memory additives in the sense of the present invention in accordance with the present option are in particular crosslinking agents, reactive oligomers, reactive fillers or reactive polymers. In the context of the present invention reactive means that a reaction as described above to establish chemical or physical network points or crosslinking points can be achieved by suitable means like irradiation, such as temperature treatment, IR irradiation, gama-, beta-irradiation, magnetic and/or electric fields, VIS or UV light. When subjected to a melt compounding process with standard polymers, such as those mentioned above, a granulate can be obtained, which may be subjected to a subsequent melt processing step, for example injection molding or extrusion, depending on the type of materials employed and the type of product desired. After this melt processing leading to the formation of molded products, a suitable post-processing treatment is carried out, in order to provide the chemical or physical crosslinks within the material. The shape as obtained after subjecting the molding to post-processing then defines the permanent shape of the material obtained. This material, in the molded form, can then be subjected to further processing steps, in particular processing steps leading to a deformation (change in shape). Suitable methods are in particular methods involving heat treatment steps in order to soften the material, followed by treatment steps involving for example a mechanical deformation, followed by cooling in order to fix the material in the deformed state. This deformed state, in accordance with the principles of shape memory materials then defines the temporary shape. Depending on the type of material, the permanent shape, i.e. the original shape after melt processing and post-processing prior to any deformation, can then be recovered upon subjection to a suitable external stimulus, for example a raise in temperature. Upon such an external stimulus, for example a raise in temperature, the material becomes again more flexible so that it reverts to the original, permanent shape.

With respect to the permanent shape and the programmed, temporary shape, the following can be stated in connection with the above-disclosed method. The permanent shape requires the possibility of processing by usual polymer processing equipment, in particular injection molding or extrusion. This provides a molded body in the permanent shape, which, however has not been fixed. Fixation of the permanent shape occurs by suitable post processing leading to the formation of the crosslinks within the material.

The programmed, temporary shape is obtained in a programming step by controlled deformation at a certain temperature. This temperature usually is well above room temperature or the service, lifetime temperature of the product. After heating and deformation, the deformed shape is fixed by cooling to room temperature or service temperature so that the molded programmed product maintains the deformed temporary shape. An alternative to these heating/deformation/cooling processes is the use of cold drawing (stretching of the material at low temperatures without causing irreversible shape changes). Recovery to the permanent shape (memorized shape) then occurs after being subjected to an external stimulus, usually a specific raise in temperature.

As outlined above, suitable shape memory additives are in particular crosslinking materials and crosslinking initiators, either standard crosslinking additives or crosslinking oligomers. It is also possible to provide the crosslinking properties by means of reactive particles, such as fillers having on the surface thereof reactive groups. This embodiment, discussed in further detail below, may for example be used in order to provide a physical or chemical crosslink with the polymer chains. The type of these additives, i.e. the shape memory additives, depends on the type of polymer used. Suitable combinations of standard polymer and shape memory additive are for example nylon 6 and dibenzoyl peroxide (DBPO), nylon 6 with PE and DBPO or any of the combinations mentioned above, where DBPO has been replaced with a different photoinitiator, that a person skilled in the art can easily select from known photoinitiators by usual experiments. Other suitable examples are reactive particles with hydroxyl groups on the surface thereof in combination with difunctional organic acid chlorides and suitably reactive polymers (polyester, polyamides) or reactive particles as mentioned before with linear polyesters, optional in combination with esterification catalysts, or organic diisocyanates and suitably reactive polymers.

Typical post-processing reactions required in order to establish these crosslinks are heat treatments in order to activate the crosslinking agents or treatment by irradiation as discussed above in order to activate and facilitate crosslinking.

Preferred in accordance with the present invention are chemical crosslinks since these usually provide the most stable crosslinks so that stable and well-defined materials can be obtained. It is, however, also possible to provide physical crosslinks, for example when using polymers having supramolecular coordination segments in combination with agents providing an interacting counterpart.

It is also possible to provide crosslinking additives by a controlled degradation of the starting materials, in particular when using thermoplastic polymers selected from the group comprising polyamides, polyesters, such as PET, PPT, and polycarbonates. A controlled degradation of such a starting material gives rise to a certain content of functional oligomers which may serve as crosslinking agents. It is, however, also possible to add further crosslinking additives, in particular if such an addition facilitates the formation of crosslinks between the polymer chains through the functional oligomers. The subsequent processing steps are similar to the processing steps described above. Usually, the starting materials, after the controlled degradation, are compounded and then processed in order to provide a desired shape. This shape is then rendered permanent by post-processing in order to establish crosslinks. Thereafter, the above-described programming takes place, i.e. a suitable treatment leading to a deformation of the material. The deformed, temporary shape can then be fixed in the usual manner, so that a shape memory material is obtained.

A further preferred method in accordance with the present invention employs the crosslinking of standard polymers using reactive particles, such as fillers having on the surface thereof reactive groups, so that a physical or chemical crosslink with the polymer chains can be established. Examples for such reactive fillers, useful for the present invention, are modified silica, micro beads, micro gels etc. The main processing steps in accordance with this preferred embodiment of the present invention are again similar to those discussed above. Namely, the starting material, such as a polyamide, a polyester, a polycarbonate, or a styrene polymer is compounded with a suitable reactive filler. It is optional to add to this mixture further agents supporting the reaction between polymer and reactive filler. It is for example suitable to include catalysts and/or further reactive agents, for example agents reactive towards the functional/reactive groups on the surface of the reactive filler and reactive groups/functions of the polymer. This compound then can be subjected to a suitable shaping process, for example by ejection molding. The permanent shape is then fixed by means of a reaction giving rise to the crosslinks within the material. The temporary shape can then be obtained by a suitable programming step, including in particular heating and deformation, followed by cooling in order to fix the temporary shape.

As outlined above, the fixation of the permanent shape usually occurs by post-crosslinking using either heat treatment or irradiation treatments. Suitable irradiations are in particular IR irradiation, UV radiation, β-radiation, γ-radiation etc., which has to be selected in accordance with the type of starting polymer and the type, shape and thickness of the object as well as the type of crosslinking agent employed.

One important advantage of the methods disclosed above is the fact that standard polymer processing equipment can be used in order to prepare and program the shape memory materials. The initial compounding of standard polymer and shape memory additive may in particular be carried out in mixers or extruders, so that typical intermediate products such as granules of compounded materials are obtained. This represents a further advantage of the present invention since these compounded mixtures may be easily packaged and transported, so that the place of manufacture of the final product can be different from the place of manufacturing the intermediate compounded mixture.

A further alternative in accordance with the present invention is the introduction of chemical modifications, such as groups providing reversible covalent bonds or reversible complexing sites into the starting polymer material. Suitable examples thereof are groups providing complexing/chelating sites, such as boric acid esters, bi-, tri, or multi dentate chelating groups, for example derived from acetylacetonate, pyridyl amines, or the like, as well as groups enabling for example (reversible) cycloaditions, such as Diels Alder reactions. Such modifications give rise to functional sites which may serve as crosslinking points, for example by providing a suitable agent for bridging the complexing/chelating sites, or by suitable reaction conditions for the cycloadditions. While such reversible crosslinks might not be as strong as the irreversible chemical crosslinks discussed above, the possibility to establish crosslinks by means of such modification of the starting material enables a very easy and straightforward approach to the formation of shape memory materials. The formation and shaping of such materials then occurs again in accordance with the general principle outlined above. Namely, the commercial polymer is subjected to a suitable treatment in order to introduce interaction sites, i.e. functional sites into the polymer chain. Thereafter, the usual compounding can take place followed by a processing in order to provide a molded product. The molded product then can be subjected to a post-processing in order to provide the reversible crosslinks. The temporary shape can then again be formed by suitable programming steps, including heat treatment, deformation and cooling.

As outlined above, the present invention enables the preparation of shape memory materials starting from rather cheap and easily available standard polymers, typically thermoplastic polymers. This approach widens the possibility for applications of shape memory materials since low cost shape memory materials are provided which furthermore can be produced using standard polymer processing equipment.

In accordance with the above, the present invention provides shape memory materials, obtainable by any of the processes outlined above. The shape memory materials in accordance with the present invention are characterized in that they comprise a standard polymer, typically a thermoplastic polymer, compounded together with a suitable crosslinking agent. In order to prepare the shape memory material, a suitable post-processing after the formation of a molded product has to be carried in order to establish a permanent shape. The temporary shape can then be obtained by usual programming steps, typically including heat treatment, deformation and cooling. Thereafter, the shape memory materials in accordance with the present invention are present in the temperature shape. The permanent shape can again be recovered by a suitable external stimulus, typically a temperature rise.

In view of the fact that the present invention employs standard polymer materials, it is possible to tailor the mechanical as well as the shape memory properties of the materials with any given application. It is in particular possible to prepare shape memory polymers having a rather high transition temperature, a rather high temperature at which the change in shape can be initiated. This enables to use the materials in accordance with the present invention in a broad variety of applications. One prominent example thereof is the use of such shape memory materials for molded products which are used as fixing means for various products, such as household products, telecommunication products, computer products, in particular housings of such products. It is possible to use the shape memory materials in accordance with the present invention in that the temporary shape as products used for securing the integrity of such products, for example casings. Once if standard instructions are desired to disassemble the product, it is merely necessary to heat the product formed from the shape memory material, so that the product changes from its temporary to its permanent shape. This permanent shape has previous been selected so that the desired function, i.e. securing the integrity of the casing, can no longer be fulfilled. Thereby, it is possible without further complicated processing steps to disassemble the product, for example in order to recover the different parts of the product for recycling purposes. Other suitable application fields are fastener device, packaging materials and sensors. In these fields of application it is possible to employ the standard thermoplastic polymers, modified as outlined in the present invention in order to obtain shape memory functionality. Thereby, cheaper shape memory materials are provided, enabling in particular the use of the materials of the invention in mass product markets, such as packaging materials, while benefiting from the unique material properties provided. Packaging materials for example may be provided enabling for example a better support of the packaged material, for example when the temperatures of the ambient atmosphere surpasses a certain threshold value. Other types of application can be envisaged by the skilled person, based on the above disclosed material properties.

## Claims

1. Method of preparing a shape memory material, comprising providing a mixture of a polymer and a shape memory additive, subjecting the mixture to a forming process, followed by subjecting the formed body obtained to a post processing treatment so that the shape memory additive provides crosslinks between different chains of the polymer and/or between the shape memory additives.

2. Method according to claim 1, wherein the polymer is selected from polyamides, polyesters, polycarbonates, polyolefins, vinyl polymers, styrene polymers as well as mixtures thereof.

3. Method according to any of claims 1 or 2, wherein the shape memory additive is selected among crosslinking agents, reactive fillers, reactive oligomers, and mixtures thereof.

4. Method in accordance with any of claims 1, 2, or 3, wherein the post processing treatment is selected among heat treatment and irradiation.

5. Method in accordance with any of claims 1, 2, 3, or 4, wherein the method further comprises the steps of deforming the formed body to any desired shape under appropriate conditions and fixing the deformed shape.

6. Shape memory material, obtainable by a method in accordance with any of claims 1 to 5.

7. Shape memory material in accordance with claim 6, further comprising additional components selected among usual additives for polymers, such as colorants, processing aids, UV absorbers, fillers, antioxidants, reinforcement agents, alone or in any mixture.

8. Shape memory material in accordance with claim 6 or 7, comprising a polymer selected from polyamides, polyesters, polycarbonates, polyolefins, vinyl polymers, styrene polymers as well as mixtures thereof and crosslinks derived from crosslinking agents activated by heat treatment.

9. Shape memory material in accordance with any of claims 6, 7, or 8, wherein the shape memory material has a transition temperature of between 50 and 110 °C.

10. Shape memory material in accordance with any of claims 6, 7, 8, or 9, wherein the shape memory material comprises a mixture of at least two polymers.

11. Use of a compounded mixture of at least one thermoplastic polymer and at least one shape memory additive for the preparation of a shape memory material.

12. Use of a shape memory material in accordance with any of claims 6 to 10 for preparing molded parts of household products, telecommunication products, computer products, automobiles, medicinal products or aviation products.

13. Use according to claim 12, wherein the molded part in the temporary, deformed shape serves as a connecting part in any of the products defined in claim 12, wherein the permanent shape is able to maintain the function of serving as connecting part, so that a facilitated disassembly is enabled.
